Europäisches Patentamt

European Patent Office

Office européen des brevets

(11) Numéro de publication: **0 286 520**
**B1**

# FASCICULE DE BREVET EUROPEEN

(45) Date de publication du fascicule du brevet:
20.06.90

(51) Int. Cl.⁵: **B62B 3/02**, B62B 3/10

(21) Numéro de dépôt: **88400789.9**

(22) Date de dépôt: **31.03.88**

(54) **Chariot à provisions pliable.**

(30) Priorité: **02.04.87 FR 8704642**

(43) Date de publication de la demande:
**12.10.88 Bulletin 88/41**

(45) Mention de la délivrance du brevet:
**20.06.90 Bulletin 90/25**

(84) Etats contractants désignés:
**DE ES GB IT**

(56) Documents cités:
**US-A- 2 155 896**
**US-A- 2 604 333**
**US-A- 2 613 951**
**US-A- 3 863 985**

(73) Titulaire: **Lemerre, Guy, 10, rue Sadi-Carnot,
F-14300 Caen(FR)**

(72) Inventeur: **Lemerre, Guy, 10, rue Sadi-Carnot,
F-14300 Caen(FR)**

(74) Mandataire: **Behaghel, Pierre et al, CABINET
PLASSERAUD 84 rue d'Amsterdam, F-75009 Paris(FR)**

## Description

La présente invention concerne les chariots à provisions utilisés par les acheteurs dans les magasins à libre service pour recevoir et transporter les marchandises qu'ils ont choisies.

Elle vise plus particulièrement les chariots du type comprenant un bâti rigide monté sur roulettes et un plateau quadrilatéral rigide porté par le bâti et constituant le fond plan d'un panier à quatre parois planes rigides, savoir : deux parois latérales constituées par des grilles, une paroi avant et une paroi arrière.

Dans des modes de réalisation connus, le plateau présente une forme trapézoïdale et la paroi avant a des dimensions réduites pour permettre le gerbage horizontal. De plus, l'ensemble doit être robuste pour répondre à des conditions d'utilisation permanente par des clients différents plus ou moins soigneux. De ce fait, les chariots considérés présentent un coût élevé de fabrication, ils sont lourds et encombrants, ce qui est gênant, en particulier pour les magasins ne bénéficiant pas de beaucoup de place de rangement à proximité des caisses. Un parc de chariots de ce type entraîne par ailleurs des coûts de main d'oeuvre importants car il est nécessaire de rassembler périodiquement les chariots abandonnés par les utilisateurs sur les parkings. Les responsables des grandes surfaces, très conscients de ce problème, ont cherché à y remédier, notamment en consignant les chariots afin d'obliger les clients à les ramener. Mais cette formule indispose la clientèle et n'empêche pas l'abandon des chariots, notamment lorsque les distances à parcourir pour les ramener sont grandes.

L'invention vise à fournir un chariot à provisions du type ci-dessus défini répondant mieux que ceux antérieurement connus aux exigences de la pratique, notamment en ce qu'il présente un coût très réduit en comparaison du coût des chariots de l'art antérieur, en ce qu'il permet de diminuer les coûts de personnel en réduisant les servitudes de rangement des chariots, en ce qu'il permet au client un transport aisé de ses achats non seulement du magasin à sa voiture, mais également de sa voiture à son domicile et en ce qu'il peut également éviter des manutentions inutiles de marchandises.

Pour ce faire, l'invention part de l'idée d'un chariot à provisions de bonne capacité utilisable en tant que tel dans le magasin mais qui est pliable et de dimensions propres à permettre son rangement dans le coffre d'une voiture, et ce en lui donnant soit les dimensions d'une valise, soit en le ramenant aux dimensions du panier dans lequel les provisions peuvent être laissées. Ceci permet au client de conserver le chariot qui n'est plus rattaché au magasin et n'a donc plus à être rangé dans celui-ci.

Du fait de son coût faible le chariot peut être fourni gratuitement par le magasin, moyennant la preuve d'une certaine fidèlité, ou encore acheté par l'utilisateur.

L'utilisation plus soignée et moins fréquente du chariot par son "propriétaire" autorise une constitution moins robuste et une conceptionn plus personalisée dudit chariot.

Dans ces buts, l'invention propose un chariot à provisions du type ci-dessus défini, caractérisé en ce qu'il comprend au moins une poignée de portage, des moyens de support règlables en hauteur entre le bâti et le plateau, ladite hauteur étant règlable entre deux valeurs extrêmes correspondant respectivement à une position de roulage haute et à une position de rangement et de portage basse du chariot et des moyens de verrouillage desdits moyens de support dans ces deux positions, en ce que le plateau est rectangulaire et horizontal dans les deux positions, et en ce que les quatre parois sont montées pivotantes autour d'axes horizontaux liés rigidement au plateau de faon à pouvoir basculer en position repliée vers l'intérieur du panier, lesdits axes étant prévus à des niveaux respectifs différents de façon à permettre aux parois d'adopter des positions repliées horizontales superposées.

Dans des modes de réalisation préférés, on a recours en outre à l'une et/ou à l'autre des dispositions suivantes :
- les moyens de support règlables en hauteur comprennent deux croisillons espacés transversalement formés par deux barres rigides disposées en croix, une extrémité de chaque barre étant montée pivotante sur le bâti et son autre extrémité coulissante sur le plateau,
- le plateau comporte deux gorges longitudinales dans lesquelles coulissent des pièces fixées aux extrémités des barres,
- la poignée de portage est solidaire du plateau.
- les parois avant et arrière sont prolongées latéralement par des joues longitudinales propres à chevaucher les parois latérales,
- les joues selon l'alinéa précédent sont agencées de façon à former un boîtier d'allure parallélépipédique avec les parois avant et arrière, avec le plateau et avec les pans verticaux qui raccordent ce plateau à ces parois lors du pliage du chariot,
- la paroi arrière du chariot comporte une barre de poussée pivotante autour d'un axe transversal solidaire de ladite paroi de façon à pouvoir prendre deux positions, une position de poussée du chariot dépliée et une position de rangement du chariot repliée vers l'intérieur du panier,
- le bâti comporte une surface plane rigide disposée entre les roulettes, et propre à servir d'espace de rangement supplémentaire,
- la paroi arrière comporte un siège pliable pour enfant constitué par une assise plane montée pivotante vers l'intérieur du panier autour d'un axe transversal lié rigidement à ladite paroi et par des moyens de soutien de l'extrémité libre de ladite assise en position horizontale,
- le chariot comporte deux poignées de portage placées sur deux côtés opposés dudit chariot.

L'invention sera mieux comprise à la lecture de la description qui suit de modes particuliers de réalisation, donnés à titre d'exemples non limitatifs.

La description se réfère aux dessins qui l'accompagnent dans lesquels :

- la figure 1 est une vue de côté du chariot selon l'invention en position de roulage,

- la figure 2 est en vue agrandie d'une fixation coulissante d'une barre de support de panier dans un chariot selon l'invention,

- la figure 3 est une vue de côté d'une variante selon l'invention du chariot toujours en position de roulage,

- la figure 4 montre le chariot de la figure 3, support replié mais panier toujours ouvert, en position dite de roulage "ramassée",

- la figure 5 est une vue de face du chariot des figures 3 et 4 en position de rangement et de portage,

- la figure 6 est une vue de côté du chariot des figures 3, 4 et 5 en position de rangement,

- la figure 7 est une vue en perspective schématique d'une variante du chariot selon l'invention porté par son utilisateur,

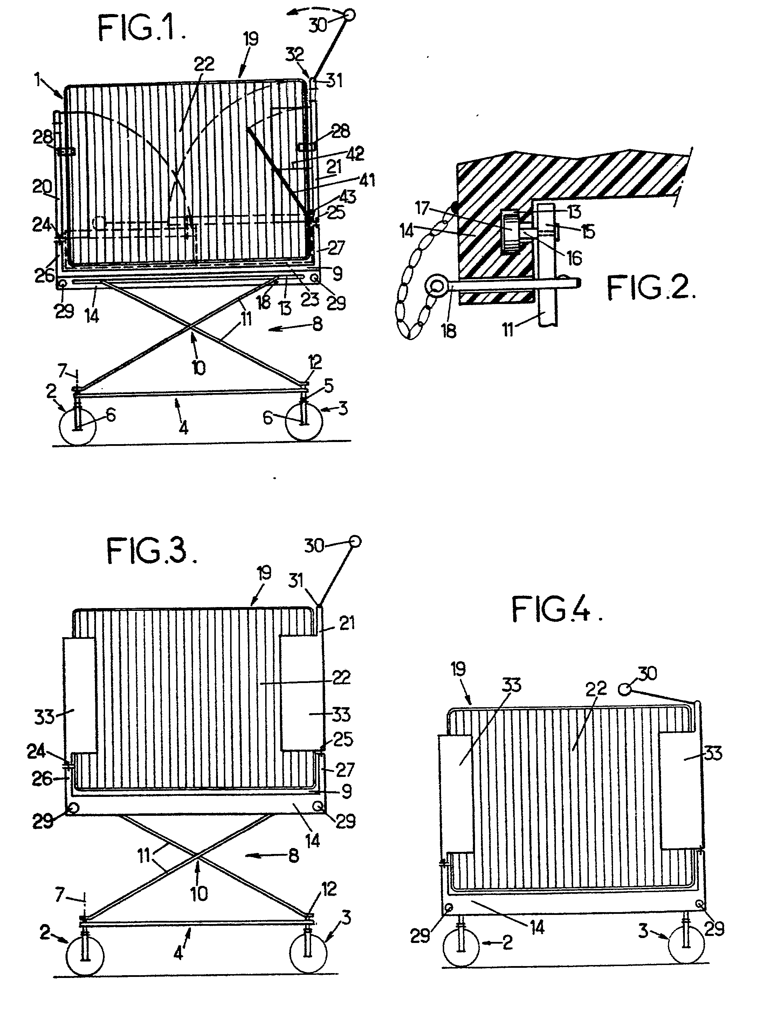

La figure 1 montre un chariot 1 à provisions comprenant une paire de roulettes avant 2 orientables espacées transversalement et une paire de roulettes arrière 3 coaxiales, espacées transversalement.

Les axes 6 des roulettes sont montés sur un bâti rigide 4 par l'intermédiaire de chapes 5 à deux branches.

Les chapes 5 ou fourches de soutien des roulettes avant sont montées pivotantes autour d'axes verticaux 7 rendant ces roulettes avant orientables par rapport au bâti 4.

Les chapes 5 des roulettes arrières sont montées fixement sur le bâti 4.

Le chariot 1 comprend également des moyens de support 8 d'un Plateau 9 formés par deux croisillons 10 espacés transversalement.

Chaque croisillon est composé de deux barres 11 rigides disposées en croix et de longueur inférieure à la dimension longitudinale du plateau 9. Les barres 11 ont chacune une extrémité montée pivotante autour d'un axe 12 solidaire du bâti 4 et l'autre extrémité montée coulissante dans une gorge 13 solidaire d'un côté longitudinal 14 du plateau 9.

La figure 2 et une vue de détail d'une gorge 13 pratiquée dans un côté longitudinal 14 du plateau 9. L'extrémité 15 de chaque barre 11 est munie d'un axe 16 sur lequel est monté un galet 17 propre à rouler librement dans la gorge 13 s'étendant le long d'un côté longitudinal 14 du plateau 9.

Des moyens de verrouillage manuels comme représentés par une clavette de butée 18 sur la figure 2, ou automatiques comme connus en soi, assurent le blocage des galets 17 dans les gorges 13 pour deux hauteurs prédéterminées du plateau 9, savoir, une position haute de roulage (figures 1 et 3) et une position basse de rangement et portage (figures 4, 5, 6 et 7).

Le plateau 9 est rectangulaire et horizontal. Il constitue le fond d'un panier 19 comportant quatre parois rigides, savoir une paroi avant 20, une paroi arrière 21 et deux parois latérales 22 constituées par des grilles.

Les parois avant et arrière peuvent être des grilles, des plaques ou une combinaison des deux et être réalisées en tout type de matériau tel que métal (acier ou aluminium par exemple) ou matière plastique, éventuellement armée de fibres de verre (matériau composite). La capacité d'un tel chariot est par exemple de l'ordre de 150 dm3, avec des dimensions du panier de 0,5m de large, 0,5m de hauteur et 0,6m de long.

Les quatre parois rigides sont montées pivotantes autour d'axes horizontaux liés rigidement au plateau 9 de façon à pouvoir basculer en position repliée vers l'intérieur du panier 19, comme montré en pointillé sur les figures 1, 5 et 6 ; à cet effet ces axes sont prévus à des niveaux différents respectifs pour permettre aux parois adopter des positions repliées horizontales superposées.

Les axes 23 des parois latérales 22 sont placés à proximité du fond, légèrement décalés verticalement l'un par rapport à l'autre, et les axes 24 et 25 des parois avant 20 et arrière 21 sont également décalés verticalement entre eux plus haut que les axes 23 comme représenté sur la figure 1.

Le plateau 9 comporte en avant et en arrière des rebords ou pans verticaux 26 et 27 délimités supérieurement par les axes 24 et 25.

Lorsque les parois sont dépliées, elles sont fixées entre elles par des moyens de fixation 28 tels que des pattes élastiques.

Deux barres 29 de portage solidaires du plateau 9 sont fixées transversalement sur ce dernier, aux deux extrémités longitudinales de celui-ci.

Une poignée constituée par une barre de poussée 30 est montée pivotante autour d'un axe 31 solidaire de la paroi arrière 21 du chariot de façon à pouvoir prendre une position dépliée de poussée du chariot par un utilisateur et une position repliée vers l'intérieur, de rangement du chariot. Il est prévu des moyens de blocage 32 de la poignée en position de poussée du chariot.

Dans une variante de réalisation illustrée sur les figures 3 à 6, les parois 20 et 21 sont prolongées latéralement par des joues 33 longitudinales dirigées du panier et sur lesquelles viennent prendre appui les parois latérales 22 en s'y fixant de préférence par des moyens connus en soi, par exemple du type des "clips" ou "loquets" (non représentés).

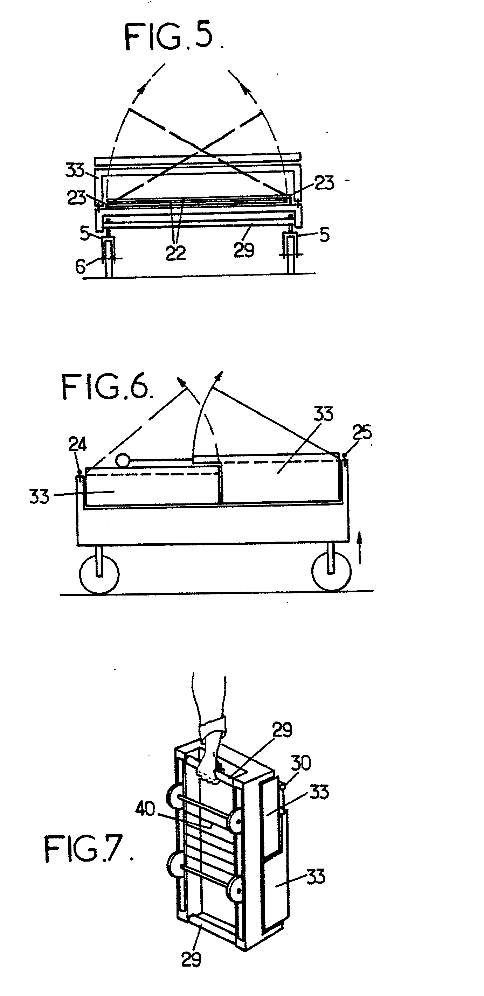

En position repliée (voir figures 5 et 6) les joues 33 encadrent les parois latérales 22 de façon à former un boitier fermé pour le rangement et le portage du chariot : à cet effet, les joues de la paroi avant ont des dimensions compatibles avec les dimensions des joues de la paroi arrière de façon à permettre le pliage des parois.

Des moyens de verrouillage non représentés empêchent les parois du panier en position repliée de s'ouvrir intempestivement pendant le transport.

Le chariot de la figure 1 comporte de plus un siège pliable 41 constitué par une assise 42 plane montée pivotante vers l'intérieur du panier autour d'un axe transversal 43 lié rigidement à ladite paroi et des moyens de soutien de l'extrémité libre de ladite assise en position horizontale.

Le fonctionnement des chariots à provisions décrits ci-dessus est le suivant.

L'utilisateur qui conserve rangé dans son coffre de voiture le chariot plié tel que représenté sur la figure 6, le sort du coffre et le transporte manuellement en le prenant par une poignée de portage 29, comme montré sur la figure 7 jusqu'au lieu de ses achats. L'utilisateur déplie alors le chariot en déverrouillant les croisillons initialement bloqués en leur position repliée et en soulevant le plateau 9 jusqu'à une position haute prédéterminée distante de l'ordre de 1m du bâti resté à proximité du sol. Les galets 17 coulissent librement dans les gorges 13 et des moyens de verrouillage assurent le blocage en position haute.

L'utilisateur déplie ensuite successivement la paroi arrière 21 et sa poignée 30 qu'il verrouille en position de poussée, puis la paroi avant 20, et enfin les parois latérales 22 qu'il fixe fermement sur les autres parois ou sur les joues 33 dans le cas où de telles joues sont prévues.

Il peut alors déplacer le chariot jusqu'au magasin et dans celui-ci et empiler dans le panier les marchandises qu'il choisit.

La surface plane rigide de rangement en partie basse entre les roulettes, permet notamment de transporter un pack de bouteilles.

Le chariot ainsi garni est ensuite déplacé au niveau de la caisse disposée à la sortie du magasin.

La hauteur du plateau et la transparence des grilles latérales permettent au caissier de vérifier le contenu du panier.

Les marchandises déchargées pour paiement sont remises en place dans le panier par l'utilisateur qui amène le chariot jusqu'à son coffre de voiture où deux choix lui sont offerts :
soit le panier est déchargé dans le coffre et le chariot est plié entièrement en réalisant les opérations inverses de celles décrites précédemment pour être rangé tel quel dans la voiture,
soit les croisillons sont simplement repliés et le panier,dont l'encombrement en hauteur ne dépasse pas une profondeur de coffre standard, de voiture est placé directement dans ce dernier; cette solution évite une manutention inutile de marchandises, les deux poignées 29 situées de part et d'autre du chariot permettant de saisir celui-ci et de le porter facilement, même chargé.

Lorsque l'utilisateur est rentré chez lui, il peut utiliser son chariot en position de roulage haute, de portage par ses deux poignées 29 ou de roulage basse ou ramassée.

Comme il va de soi, et comme il en résulte d'ailleurs de ce qui précède, l'invention ne se limite nullement à ceux de ses modes d'application et de réalisation qui ont été plus spécialement envisagés ; elle en embrasse au contraire toutes les variantes, notamment :
- celles où les moyens de verrouillage, de blocage et de fixation des parois les unes sur les autres sont différents de ceux préalablement évoqués, étant constitués par exemple par des crochets, boutons ou aimants,
- celles où les moyens de portage sont des sangles ou poignées et non des barres,
- celles où le chariot, par son accastillage soigné ajouté à un modèle de base du type décrit ci-dessus, permet une véritable personnalisation du chariot, en particulier par son donateur et/ou son vendeur.

**Revendications**

1. Chariot (1) à provisions comprenant un bâti rigide (4) monté sur roulettes (2,3), un plateau quadrilatéral rigide (9) porté par le bâti et constituant le fond plan d'un panier (19) à quatre parois planes rigides, savoir : deux parois latérales (22) constituées par des grilles, une paroi avant (20) et, une paroi arrière (21), caractérisé en ce qu'il comprend au moins une poignée de portage (29), des moyens de support (8) règlables en hauteur entre le bâti (4) et le plateau (9) ladite hauteur étant règlable entre deux valeurs extrêmes correspondant respectivement à une position de roulage haute et à une position de rangement et de portage basse du chariot, et des moyens (18) de verrouillage desdits moyens (8) de support dans ces deux positions, en ce que le plateau (9) est rectangulaire et horizontal dans les deux positions, et en ce que les quatre parois (20, 21, 22) sont montées pivotantes autour d'axes horizontaux (23, 24, 25) liés rigidement au plateau (9) de façon à pouvoir basculer en position repliée vers l'intérieur du panier, lesdits axes étant prévus à des niveaux respectifs différents de façon à permettre aux parois d'adopter des positions repliées horizontales superposées.

2. Chariot selon la revendication 1, caractérisé en ce que les moyens de support (8) règlables en hauteur comprennent deux croisillons (10) espacés transversalement formés par deux barres rigides (11) disposées en croix, une extrémité de chaque barre étant montée pivotante sur le bâti (4) et son autre extrémité coulissante sur le plateau (9).

3. Chariot selon la revendication 2, caractérisé en ce que le plateau (9) comporte deux gorges longitudinales (13) dans lesquelles coulissent des pièces (17) fixées aux extrémités des barres.

4. Chariot selon l'une quelconque des revendications précédentes, caractérisé en ce que la poignée de portage (29) est solidaire du plateau (9).

5. Chariot selon l'une quelconque des revendications précédentes, caractérisé en ce que les parois avant (20) et arrière (21) sont prolongées latéralement par des joues longitudinales (33) propres à chevaucher les parois latérales (22).

6. Chariot selon la revendication 5, caractérisé en ce que les joues (33) sont agencées de façon à former un boîtier d'allure sensiblement parallèlépipédique avec les parois avant (20) et arrière (21), avec le plateau (9) et avec les pans verticaux (26, 27) qui raccordent ce plateau à ces parois lors du pliage du chariot.

7. Chariot selon l'une quelconque des revendications précédentes, caractérisé en ce que la paroi arrière (21) du chariot comporte une barre de poussée pivotante (30) autour d'un axe transversal (31) solidaire de ladite paroi (21) de façon à pouvoir prendre deux positions, une position dépliée de poussée du chariot et une position repliée vers l'intérieur du panier de rangement du chariot.

8. Chariot selon l'une quelconque des revendications précédentes, caractérisé en ce que le bâti (4) comporte une surface plane rigide (40) disposée entre les roulettes (2, 3) et propre à servir d'espace de rangement supplémentaire.

9. Chariot selon l'une quelconque des revendications précédentes, caractérisé en ce que la paroi arrière (21) comporte un siège pliable (41) constitué par une assise plane (42) montée pivotante vers l'intérieur du panier autour d'un axe transversal (43) liée rigidement à ladite paroi et par des moyens de soutien de l'extrémité libre de ladite assise en position horizontale.

10. Chariot selon l'une quelconque des revendications précédentes, caractérisé en ce qu'il comporte deux poignées de portage (29) placées sur deux côtés opposés du chariot.

**Patentansprüche**

1. Einkaufswagen (1), der aus einem starren, auf Rädern (2, 3) befestigten Rahmen (4) und einer vierseitigen starren Auflage (9) besteht, die sich auf dem Rahmen abstützt und den ebenen Boden eines Korbes (19) mit vier starren ebenen Wänden, nämlich zwei aus Gittern gebildeten Seitenwänden (22), einer Vorderwand (20) und einer Rückwand (21) bildet, dadurch gekennzeichnet, daß der Einkaufswagen wenigstens einen Traggriff (29), Stützeinrichtungen (8), die zwischen dem Rahmen (4) und der Auflage (9) höhenverstellbar angeordnet sind, wobei die Höhe zwischen zwei Endstellungen nämlich einer hohen Schiebestellung und einer niedrigen Abstell- und Tragstellung des Wagens einstellbar ist und Mittel (18) zur Verriegelung der Stützeinrichtungen (8) in diesen beiden Stellungen enthält, daß die Auflage (9) rechteckig ist und in den beiden Stellungen eine horizontale Lage hat und daß die vier Wände (20, 21, 22) schwenkbar um horizontale Achsen (23, 24, 25) angebracht sind, die fest mit der Auflage verbunden sind, und in eine in den Innenraum des Korbes eingeklappte Stellung verschwenkt werden können, wobei die Achsen in unterschiedlichen Höhenlagen angeordnet sind, damit die Wände in der eingeklappten Stellung eine horizontale Lage einnehmen können, bei der sie übereinander liegen.

2. Einkaufswagen nach Anspruch 1, dadurch gekennzeichnet, daß die höhenverstellbaren Stützeinrichtungen (8) zwei Tragkreuze (10) enthalten, die in Querrichtung im Abstand voneinander angeordnet sind und aus zwei starren Stangen (11) gebildet werden, die über Kreuz angeordnet sind, wobei ein Ende jeder Stange schwenkbar an dem Rahmen (4) und das andere Ende verschiebbar an der Auflage (9) angebracht ist.

3. Einkaufswagen nach Anspruch 2, dadurch gekennzeichnet, daß die Auflage (9) zwei Längsschlitze (13) enthält, in denen sich an den Enden der Stangen angebrachte Gleitstücke (17) verschieben.

4. Einkaufswagen nach einem der vorhergehenden Ansprüche, dadurch gekennzeichnet, daß der Traggriff (29) an der Auflage (9) befestigt ist.

5. Einkaufswagen nach einem der vorhergehenden Ansprüche, dadurch gekennzeichnet, daß die Vorderwand (20) und die Rückwand (21) seitliche Verlängerungen in Form von länglichen Wangen (33) aufweisen, die die Seitenwände (22) übergreifen.

6. Einkaufswagen nach Anspruch 5, dadurch gekennzeichnet, daß die Wangen (33) so ausgebildet sind, daß sie, wenn der Einkaufswagen zusammengelegt ist, mit der Vorderwand (20) und der Rückwand (21) sowie mit der Auflage (9) und den senkrechten Flächenabschnitten (26, 27), die die Auflage mit diesen Wänden verbinden, einen praktisch quaderförmigen Kasten bilden.

7. Einkaufswagen nach einem der vorhergehenden Ansprüche, dadurch gekennzeichnet, daß die Rückwand (21) des Wagens mit einer um eine Querachse (31) schwenkbaren Schubstange (30) versehen ist, die so an der Wand (21) befestigt ist, daß sie zwei Stellungen einnehmen kann, nämlich eine hochgeklappte Stellung zum Schieben des Wagens und eine Stellung zum Abstellen des Wagens, bei der sie zum Innenraum des Korbes eingeklappt ist.

8. Einkaufswagen nach einem der vorhergehenden Ansprüche, dadurch gekennzeichnet, daß der Rahmen (4) eine starre, ebene Oberfläche (40) hat, die sich zwischen den Rollen (2, 3) erstreckt, und einen zusätzlichen Stapelraum bilden kann.

9. Einkaufswagen nach einem der vorhergehenden Ansprüche, dadurch gekennzeichnet, daß die Rückwand (21) einen Klappsitz (41), der aus einer ebenen Sitzfläche (42) besteht, die um eine querverlaufende Achse (43) in den Innenraum des Korbes verschwenkbar ist, die fest mit der Wand verbunden ist, und Einrichtungen enthält, mit denen das freie Ende des Sitzes in der horizontalen Stellung abgestützt wird.

10. Einkaufswagen nach einem der vorhergehenden Ansprüche, dadurch gekennzeichnet, daß er zwei Traggriffe (29) enthält, die an zwei sich gegenüberliegenden Seiten des Wagens angebracht sind.

**Claims**

1. Shopping trolley (1) comprising a rigid frame (4) mounted on wheels (2, 3), a quadrilateral rigid plate (9) carried by the frame and forming the flat bottom of a basket (19) with four flat rigid walls, namely: two sidewalls (22) formed by latticework, a front wall (20) and a rear wall (21), characterized in that it comprises at least one carrying handle (29), support means (8) which are adjustable in height between the frame (4) and the plate (9), said height being adjustable between two endmost values corresponding respectively to a high running position and a low storage and carrying position of the trolley and means (18) for locking said support means (8) in these two positions, in that the plate (9) is rectangular and horizontal in both positions, and in that the four walls (20, 21, 22) are mounted for pivoting about horizontal shafts (23, 24, 25) fixed rigidly to the plate (9) so as to be able to pivot in the folded up position towards the inside of the basket, said shafts being provided at different respective levels so that the walls can adopt superimposed horizontal folded-up positions.

2. Trolley according to claim 1, characterized in that the height adjustable support means (8) comprise two crossed struts (10) spaced transversely apart and formed by two rigid bars (11) disposed in the form of a cross, one end of each bar being mounted for pivoting on the frame (4) and its other end sliding on the plate (9).

3. Trolley according to claim 2, characterized in that the plate (9) comprises two longitudinal grooves (13) in which slide pieces (7) fixed to the ends of the bars.

4. Trolley according to any one of the preceding claims, characterized in that the carrying handle (29) is fast with the plate (9).

5. Trolley according to any one of the preceding claims, characterized in that the front wall (20) and rear wall (21) are extended laterally by longitudinal cheeks (33) adapted to overlap the sidewalls (22).

6. Trolley according to claim 5, characterized in that the cheeks (33) are adapted so as to form a box of substantially parallelepipedic trend with the front (20) and rear (21) walls, with the plate (9) and with the vertical sections (26, 27) which join this plate to these walls when the trolley is folded-up.

7. Trolley according to any one of the preceding claims, characterized in that the rear wall (21) of the trolley comprises a push bar (30) pivoting about a transverse shaft (31) fixed to said wall (21) so as to be able to assume two positions, an unfolded position for pushing the trolley and a folded-up position inside the basket for storing the trolley.

8. Trolley according to any one of the preceding claims, characterized in that the frame (4) comprises a flat rigid surface (40) disposed between the wheels (2, 3) and adapted to serve as additional storage space.

9. Trolley according to any one of the preceding claims, characterized in that the rear wall (21) comprises a fold-up seat (41) formed by a flat sitting portion (42) mounted for pivoting inside the basket about a transverse shaft (43) fixed rigidly to said wall and by means for supporting the free end of said sitting portion in the horizontal position.

10. Trolley according to any one of the preceding claims, characterized in that it comprises two carrying handles (29) placed on two opposite sides of the trolley.

FIG.1.

FIG.2.

FIG.3.

FIG.4.

EP 0 286 520 B1

# FIG.5.

# FIG.6.

# FIG.7.